# EUROPEAN PATENT APPLICATION

(11) **EP 2 027 803 A1**
(43) Date of publication of application: **25.02.2009**
(21) Application number: 08162616.0
(22) Date of filing: 19.08.2008
(51) Int. Cl.: A47J 47/12

(54) **Storage bin, in particular for storing foodstuffs, more particularly for storing bread**

(30) Priority: 22.08.2007 NL 2000826
(71) Applicant: Brabantia Nederland B.V., 5583 BP Waalre (NL)
(72) Inventor: Marrone, Deborah, BE-3630, Maasmechelen (BE)
(74) Representative: van Westenbrugge, Andries

(57) **Abstract**

The invention relates to a storage bin (1), in particular a bin for storing foodstuffs, more particularly a bin for storing bread, comprising a box (3) having an opening as well as a lid (5) which is suspended from the box (3) and can be moved between an open and a closed position for opening and closing the opening, respectively,
characterized by pressing means (11) for forcing the lid into the open position, and a closure (4) which can be brought into an operative position for keeping the lid in the closed position and which can be brought into an inoperative position for moving the lid into the open position under the effect of the pressing means (11).

## Description

The invention relates to a storage bin, in particular for storing foodstuffs such as bread, comprising a box (3) having side walls and an opening as well as a lid (5) which is connected to the side walls by means of a hinge (11) and can be moved between an open position for making the opening accessible and a closed position for closing the opening, in which closed position of the lid a substantially closed space is formed in the box, which lid has a curved shape and which side walls follow the contour of the periphery of the lid.

In an open position of such a storage bin, pastry products or bread, for example, can be placed therein, following which the bin is closed, so that the bread or the pastry products are in a closed space and thus remain fresh for a relatively long period of time.

A storage bin of the abovementioned kind is known from GB 595 503. In this case, a bin or box having an opening is described, in which a lid which is suspended in the box or bin can be moved between a position in which the opening remains open (open position) and a position in which the opening is closed (closed position). The lid is designed in such a manner that, when it is in the closed position, the lid will remain in a closed position due to the force of gravity. The hinge points of the lid are in addition placed in such a manner that, when the lid is in an open position, the lid remains in the open position by the force of gravity. When the lid is moved between the open and the closed positions, the centre of gravity of the lid will pass a dead point. When the centre of gravity of the lid passes this dead point, the force of gravity will move the lid into the opposite position.

It has been found that both opening and closing a storage bin of this type can result in inconvenience to the user. When the lid is moved from the one position to the other position, the centre of gravity of the lid has to be moved beyond the dead point from an at-rest position. The user has to exert a force on the lid for the entire distance which the centre of gravity of the lid travels between the at-rest position and the dead point, making this an inefficient operation. In this case, it is immaterial whether the lid is in a closed or open position, as the user has to do work in either case in order to move the latter to the open or closed position. This makes opening and closing of a storage bin of this type laborious.

In addition, the user may hurt himself if the lid drops into a closed position which may occur, for example, if the work the user has to do in order to bring the lid from a closed position to an open position does not suffice in order to take the centre of gravity of the lid beyond the dead point, as a result of which the lid drops back to a closed position. However, the work the user does on the lid in order to move this from an open position into a closed position may also be excessive, in which case the lid can drop into a closed position with great speed. In both situations, the user may become hurt if a hand or fingers are situated in the opening of the box and the lid lands thereon with great force.

It is therefore an object of the present invention to provide a storage bin which can be opened and closed efficiently. It is also an object to provide a storage bin which can be opened in a simple and efficient manner. It is furthermore an object of the invention to provide a storage bin with a reduced risk of a user hurting himself when opening or closing the storage bin.

In order to achieve at least one of the abovementioned objects, the invention provides a storage bin which is characterized by pressing means for forcing the lid into the open position, and a closure which can be brought into an operative position for keeping the lid in the closed position and which can be brought into an inoperative position for moving the lid into the open position under the effect of the pressing means. A storage bin of this type has the advantage that after the closure has been brought into the inoperative position, the pressing means automatically move the lid of the storage bin from a closed position to an open position.

In a specific embodiment, the rotation shaft of the lid extends substantially horizontally. In other embodiments, the rotation shaft may have another orientation.

Thus, the rotation shaft may be placed horizontally, vertically or at any other orientation inbetween. The pressing means will in each case ensure that the lid automatically moves to an open position, as a result of which the opening of the storage bin is accessible to the user. Thus, the user can take items from the storage bin or place items therein, for example pastry products. During closure of a storage bin of this type, there is, moreover, no risk of the lid dropping into a closed position, as the pressing means want to push the lid into an open position. This eliminates the risk of the user getting hurt when closing the storage bin.

According to a first aspect of the invention, the pressing means comprise a spring which is attached to the box and to the lid. In this case, the spring will be stressed when the storage bin is closed, as a result of which the lid will move into an open position when the storage bin is opened.

According to a second aspect of the invention, damping means are provided in order to dampen the displacement movement of the lid into the open position. The use of damping means ensures that the lid does not reach the open position at high speed when the storage bin is being opened, but rather that opening is effected in a smooth manner. Thus, there will be no damage to the lid when the storage bin is being opened. In addition, this embodiment has the advantage that the opening or closing of the storage bin does not result in any hard noise.

Preferably, the damping means comprise a shaft having a wheel attached to a first end and a rotor attached to a second end, with the wheel being rotatably driven by a displacement of the lid, and with the rotor being rotatably suspended in a housing filled with damping liquid in order to dampen the movement of the lid. This embodiment ensures that the damping means can be of compact design and that they can be positioned close to the hinge point of the lid, which results in a cost saving.

Yet more preferably, the storage bin is provided with a spring and damper housing, comprising a first part which is connected to the box of the storage bin and which is rotatably suspended in a second part which is connected to the lid of the storage bin, in which a first end of the spring is attached to the first part of the spring and damper housing and a second end of the spring is attached to the second part of the spring and damper housing and in which the damping means are attached in the first part of the spring and damper housing and in which the wheel of the damping means is a toothed wheel which engages with a set of teeth which are provided on at least part of the outermost peripheral part of the second part of the spring and damper housing. In this manner, the pressing means and the damping means are placed at a short distance from one another in a single component which is fitted together before the storage bin is assembled. This component also serves for suspending the lid from the storage bin. This combination ensures that the storage bin consists of relatively few parts, as a result of which it can be assembled quickly.

In one embodiment, the first part is provided with a first stop and the second part with a second stop, with the first stop and the second stop resting against one another in an open position of the storage bin. In this manner, movement of the box of the storage bin is prevented in a controlled manner when the latter is in an open position. Preferably, at least one of the stops comprises spring means, in particular a leaf spring, resulting in a sprung stop. Thus, the lid comes to a standstill in a smooth manner at the end of the opening movement without damage. It will be clear to the person skilled in the art that this leaf spring can be used for either the first stop or the second stop without the sprung stop losing its function.

According to a third aspect of the invention, a closure is provided, by means of which the lid can be kept in a closed position. By means of opening the closure, the lid of the storage bin will be moved into an open position. In a first embodiment, the closure is a mechanical closure which can be brought into an inoperative position by exerting a pressure force. A closure of this type ensures that the user can open the storage bin by using only a simple pressure force.

In a second embodiment, the closure comprises magnetic means which can be brought into an inoperative position by exerting a pressure force. In this case, too, the user can open the storage bin by means of a simple pressure force. This type of closure has the added advantage that it is relatively simple, as a result of which it is inexpensive.

In a third embodiment, the closure comprises click-fit means which can alternately be brought into an operative and an inoperative position by exerting a pressure force. Preferably, the click-fit means comprise a mechanical closure, composed of a first part comprising a pin with a plug and a second part comprising a coupler socket having an opening into which a stud with hooks is fitted so as to be able to move, in which the hooks can alternately be brought into a closed position and an open position by means of a pressure force exerted on this stud, and in which these hooks grip the plug in a closed position in order to effect closing, and in which these hooks release the plug in an open position, as a result of which the lock opens. The particular advantage of this type of closure is that it can not only be opened in a simple manner, but can also be closed in a simple manner, as the hooks of the mechanical closure automatically grip the lock of the closure when the storage bin is being closed. As a result thereof, closure will be effected immediately, thus eliminating the risk of the lid of the storage bin again moving into an open position.

In one preferred embodiment, the lid has a curved shape and is rotatably suspended with respect to the box. This embodiment has the advantage that both the pressing means and the damping means can be positioned close to the hinge of the lid.

Preferably, the periphery of the lid takes up approximately a quarter of a circle. This embodiment results in an optimum distribution between the amount of material required for the lid and the available size of the opening of the storage bin.

In order to keep the storage bin as compact as possible, the lid is preferably accommodated inside the box when it is in the open position. The shape of the lid is preferably circular, viewed in cross section, that is to say at right angles to the pivot axis. The contours of the side walls may be correspondingly of circular design. In normal use, when the bottom of the bin is situated on a base, the lid can be forced to the closed position under the effect of the force of gravity. The force or the torque delivered by the drive means is such that the lid is forced to the open position against the action of the force of gravity.

Reference is made to the prior art as disclosed in GB-A-2,422,286, from which a device is known which can be sealed in an airtight manner and is intended for storing foodstuffs. In one of the embodiments, this device may comprise a box having a curved lid which is accommodated therein so as to be displaceable. According to another embodiment, the lid can be moved into the open position under spring prestress. The lid can, counter to the spring prestress, be kept in the closed position by a closure. The closed device may be kept under reduced pressure by means of an electrically driven fan. This publication does not disclose a bin having a hingedly suspended lid.

Reference is furthermore made to the prior art as disclosed in GB-A-2,381,290. This publication discloses a cover compartment with a rotatably suspended lid. The lid is forced into the open position under the effect of prestressing springs and can be locked in a closed position against the prestress exerted by these prestressing springs. However, the lid is not attached to the compartment by means of a hinge.

Some embodiments of the storage bin will be explained in more detail with reference to the attached figures, in which:
Fig. 1 shows a perspective view of a storage bin according to an embodiment of the invention;
Fig. 2 shows a perspective view of a part of the box of the storage bin with the first and second part of the spring and damper housing attached thereto;
Figs. 3a and 3b show a cut-away drawing of the spring and damper housing and the inside of the second part of the spring and damper housing, respectively; and
Fig. 4 shows a perspective view of a mechanical closure according to an embodiment of the invention.

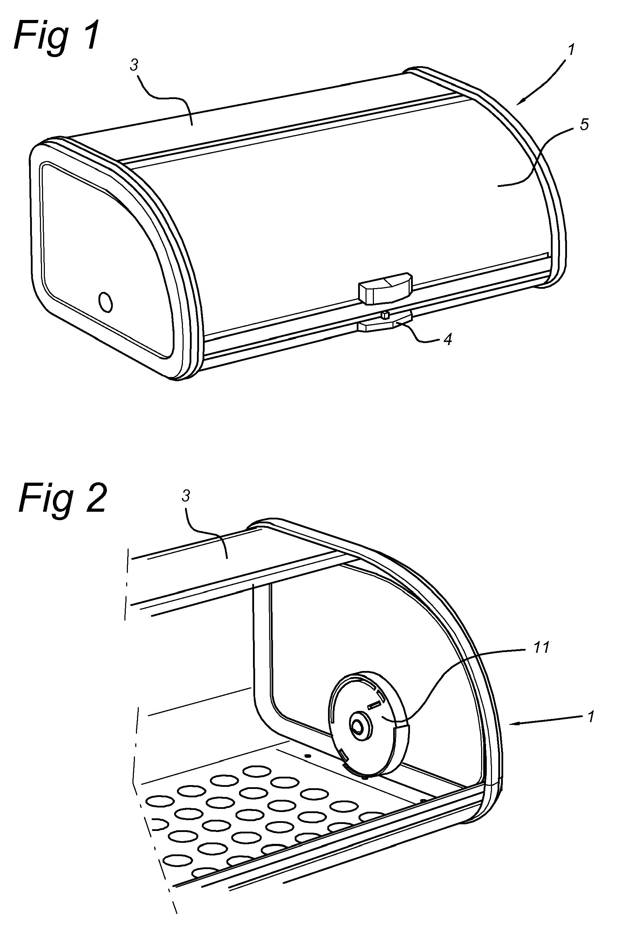

Fig. 1 shows a storage bin 1, comprising a box 3 having an opening and a lid 5 suspended from the box 3 and displaceable between an open and a closed position for opening and closing the opening, respectively. The storage bin 1 is provided with pressing means for forcing the lid into the open position. These pressing means may, for example, comprise a spring. In addition, the storage bin is provided with a closure 4 which can be brought into an operative position for keeping the lid in the closed position against the spring force, and which can be brought into an inoperative position for moving the lid into the open position under the effect of the pressing means.

In a first embodiment, the closure 4 is a mechanical closure which, by exerting a pressure force or tensile force, can be brought from the operative position, in which position the lid 5 is attached at at least one additional point to the box 3 in addition to the hinge points and thus closes off the opening of the box, into an inoperative position in which the opening of the box 3 is freely accessible from the outside. In a second embodiment, the closure 4 comprises a magnetic contact which can be brought into the inoperative position by exerting a pressure force or tensile force which is greater than the magnetic force. In a third embodiment, the closure comprises click-fit means which can alternately be brought into an operative and an inoperative position by exerting a pressure force. Preferably, the click-fit means comprise a mechanical closure having hooks, which hooks, in an operative position, grip a lock and which, in the inoperative position, do not grip the lock.

Fig. 2 shows a perspective view of a desired embodiment of the storage bin. For the sake of clarity, the lid 5 of the box 3 is not shown in this figure. A part of the box 3 of the storage bin 1 is visible, having a spring and damper housing 11 attached therein, in which the pressing means and damping means are provided and which also acts as a hinge from which the lid 5 of the storage bin 1 is rotatably suspended.

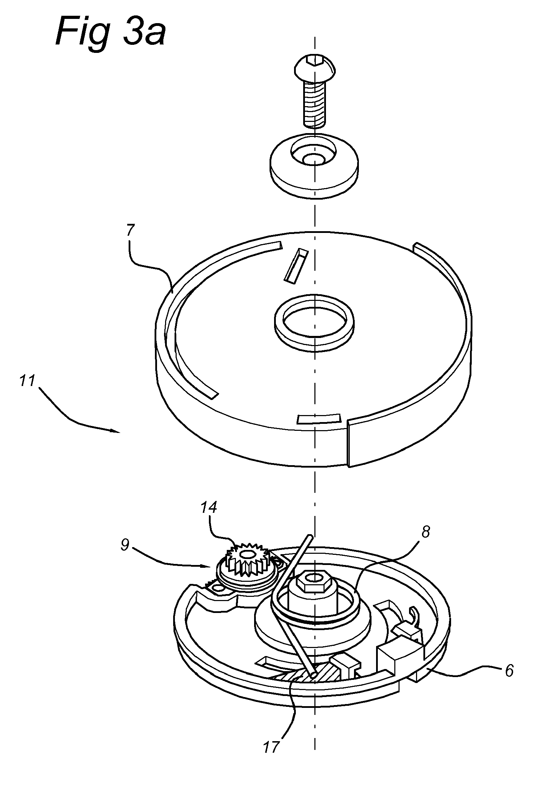

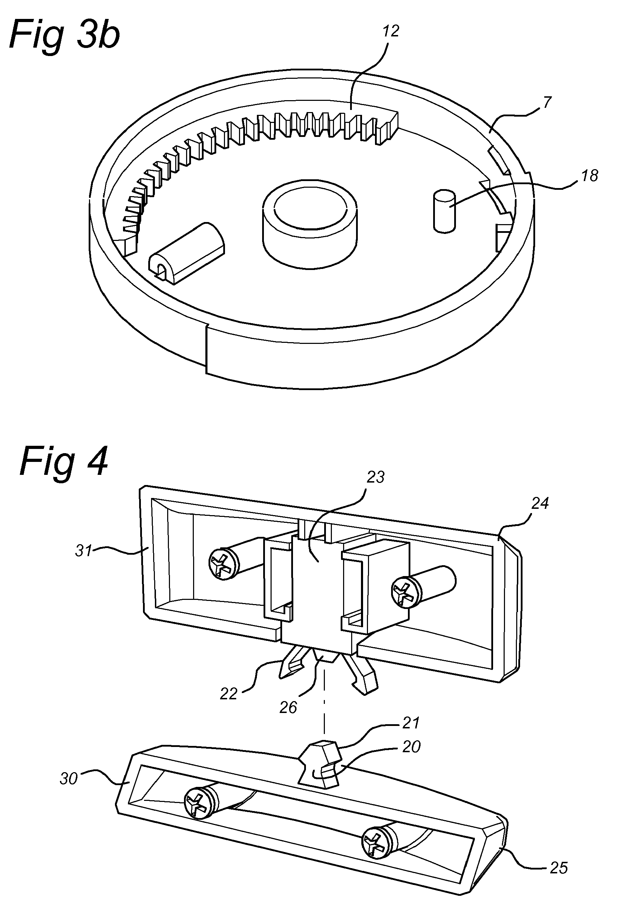

Figs. 3a and 3b show a cut-away drawing of the spring and damper housing 11 according to an embodiment of the invention, having a first part 6 and a second part 7, in which the pressing means 8 comprise a spring, a first end of which is attached to the first end of the spring and damper housing and a second end of which is attached to the second part 7 of the spring and damper housing 11. Damping means 9 are provided on the first part 6 of the spring and damper housing 11. The first part 6 is provided with a first stop 17 and the second part 7 is provided with a second stop 18.

Preferably, the damping means 9 comprise a shaft with a wheel 14 attached to a first end and a rotor attached to a second end, with the wheel 14 being rotatably driven by displacement of the lid 5 and with the rotor being rotatably suspended in a housing filled with damping liquid in order to dampen the movement of the lid.

The wheel 14 can be designed in various ways, such as those known to the person skilled in the art, but in a particularly advantageous embodiment the wheel of the damping means 9 is a toothed wheel 14 which engages with a set of teeth 12 which is provided on the inside of the second part 7 of the spring and damper housing 11, as is illustrated in Fig. 3b. In this manner, there is a direct connection between the movement of the lid 5 of the storage bin 1 and the movement of the wheel 14 of the damping means 9, which reduces the risk of slip and the ensuing reduced efficiency of the damping means 9.

Fig. 4 shows a mechanical closure 4 having a first part 30 comprising a pin 20 with a plug 21, attached to a first housing 25, and a second part 31 attached to a lock housing 24 and comprising a coupler socket 23 having an opening into which a stud 26 with hooks 22 is fitted so as to be able to move. With this type of closure, one of the two parts is attached to the box 3 of the storage bin 1, and the other part is attached to the lid 5 of the storage bin 1 in order to bring and keep the lid of the storage bin in a closed position. In order to operate the closure 4, the pin 20 with the plug 21 is displaced and moved between the hooks 22 in the direction of the stud 26. When the plug 21 touches the stud 26, the stud will move up together with the hooks, as a result of which the hooks move towards one another through the shaft in the coupler socket 23 and grip the plug, as a result of which the latter is integral with the hooks. Once the stud has reached the top, it will latch securely into this position, as a result of which closing is effected. The closure can only be released again by exerting a pressure force on the stud a second time. In this case, the stud will be lowered, the hooks will move out of the shaft in the coupler socket and the connection between the hooks and the plug will be cancelled.

It will be clear to those skilled in the art that the present invention is not limited to that which has been described above and that several equivalent embodiments of the invention are possible.

## Claims

1. Storage bin (1), in particular for storing foodstuffs such as bread, comprising a box (3) having side walls and an opening as well as a lid (5) which is connected to the side walls by means of a hinge (11) and can be moved between an open position for making the opening accessible and a closed position for closing the opening, in which closed position of the lid a substantially closed space is formed in the box, which lid has a curved shape and which side walls follow the contour of the periphery of the lid,
**characterized by**
pressing means (11) for forcing the lid into the open position, and a closure (4) which can be brought into an operative position for keeping the lid in the closed position and which can be brought into an inoperative position for moving the lid into the open position under the effect of the pressing means (11).

2. Storage bin according to Claim 1, in which the pressing means (11) comprise a spring (8), a first end of which is attached to the box and a second end of which is attached to the lid.

3. Storage bin according to Claim 1 or 2, in which damping means (9) are provided in order to dampen the displacement movement of the lid into the open position.

4. Storage bin according to Claim 3, in which the damping means comprise a shaft having a wheel (14) attached to a first end and a rotor attached to a second end, with the wheel being driven by a displacement of the lid, and with the rotor being rotatably suspended in a housing filled with damping liquid in order to dampen the movement of the lid.

5. Storage bin according to Claims 2 and 4, in which the storage bin is provided with a spring and damper housing (11), comprising a first part (6) which is connected to the box of the storage bin and which is rotatably suspended in a second part (7) which is connected to the lid of the storage bin, in which a first end of the spring (8) is attached to the first part of the spring and damper housing and a second end of the spring is attached to the second part of the spring and damper housing and in which the damping means (9) are attached in the first part of the spring and damper housing and in which the wheel (14) of the damping means is a toothed wheel which engages with a set of teeth (12) which are provided on at least part of the outermost peripheral part of the second part of the spring and damper housing.

6. Storage bin according to Claim 5, in which the first part (6) is provided with a first stop (17) and the second part (7) is provided with a second stop (18), with the first stop (17) and the second stop (18) resting against one another in an open position of the storage bin.

7. Storage bin according to Claim 6, in which at least one of the stops (17, 18) comprises spring means, preferably one or more leaf springs.

8. Storage bin according to one of the preceding claims, in which the closure (4) is a mechanical closure which can be brought into the inoperative position by exerting a pressure force or tensile force.

9. Storage bin according to one of Claims 1 to 7, in which the closure (4) comprises magnetic means which can be brought into an inoperative position by exerting a pressure force.

10. Storage bin according to one of Claims 1 to 7, in which the closure (4) comprises click-fit means which can alternately be brought into an operative and an inoperative position by exerting a pressure force.

11. Storage bin according to Claim 10, in which the click-fit means comprise a mechanical closure, composed of a first part (30) comprising a pin (20) with a plug (21) and a second part (31) comprising a coupler socket (23) having an opening into which a stud (26) with hooks (22) is fitted so as to be able to move, in which the hooks can alternately be brought into a closed position and an open position by means of a pressure force exerted on this stud, and in which these hooks grip the plug in a closed position in order to effect closing, and in which these hooks release the plug in an open position, as a result of which the closure (4) opens.

12. Storage bin according to one of the preceding claims, in which the periphery of the lid takes up approximately a quarter of a circle.

13. Storage bin according to one of the preceding claims, in which the lid is accommodated inside the box when it is in the open position.

14. Use of a storage bin as defined in one of the preceding claims.
